# EUROPEAN PATENT SPECIFICATION

(11) **EP 2 309 816 B1**
(45) Date of publication and mention of the grant of the patent: **26.12.2012**
(21) Application number: 09172599.4
(22) Date of filing: 08.10.2009
(51) Int. Cl.: H04W 72/04

(54) **Method and system for supplemental channel request messages in a wireless network**
Verfahren und System für ergänzende Kanalanforderungsbenachrichtigungen in einem drahtlosen Netzwerk
Procédé et système de messagerie de requête de canal supplémentaire dans un réseau sans fil

(30) Priority: 08.10.2009 US 103760 P
(43) Date of publication of application: 13.04.2011
(73) Proprietor: Research In Motion Limited, Waterloo, ON N2L 3W8 (CA)
(72) Inventor: Gupta, Rakesh, Kanata Ontario K2K 3K1 (CA); Hossain, Asif, Kanata Ontario K2K 3K1 (CA)
(74) Representative: Moore, Barry

(56) References cited:
- EP-A2- 2 031 763
- WO-A1-2004/068808
- US-A1- 2009 117 931

## Description

### FIELD OF THE APPLICATION

The present disclosure relates to channel request messages in communications systems, and in one example to supplemental channel request messages in a code division multiple access (CDMA) system.

### BACKGROUND

In communication systems, typically downlink data is provided with much more bandwidth than uplink data. When a user is required to send significant information from a mobile device to a base station, resources are typically requested.

One way to do this, as indicated in US Patent Number 6,757,541 to Achour et al., uses a reverse supplemental channel (R-SCH) for the mobile device, the R-SCH being assigned a data rate.

Supplemental Channel Request Messages (SCRM) are sent in the uplink asking for a given reverse supplemental channel with a defined data rate. In a conventional approach which implements a CDMA stack, the rate is determined periodically, for example, every one to five seconds. Field tests of devices implementing the code have found that, in some instances, the device requests a lower rate than that which the device is capable of achieving based on its power and traffic conditions.

### SUMMARY

The present disclosure provides a method for obtaining reverse supplemental channel resources for a mobile device comprising: filtering a closed loop correction power value; calculating a data rate utilizing the filtered closed loop correction power value; and
sending a supplemental channel request message, including the calculated data rate, to a base station transceiver system.

The present disclosure further provides a mobile device configured to obtain reverse supplemental channel resources, the mobile device comprising: a processor configured to: filter a closed loop correction power value; and calculate a data rate utilizing the filtered closed loop correction power value; and a communications subsystem configured to send a supplemental channel request message, including the calculated data rate, to a base station transceiver system.

### BRIEF DESCRIPTION OF THE DRAWINGS

The present disclosure will be better understood with reference to the drawings in which:
**Figure 1** is a block diagram of a mobile device communicating with a base station transceiver system;
**Figure 2** is a graph showing instantaneous closed loop correction parameter values over time;
**Figure 3** is a graph showing closed loop correction parameter values over time when smoothed by a moving average filter;
**Figure 4** is a graph showing closed loop correction parameter values over time when smoothed by a IIR filter;
**Figure 5** is a data flow diagram showing interaction between a mobile device and BTS for instantaneous closed loop correction parameter values;
**Figure 6** is a data flow diagram showing interaction between a mobile device and BTS for filtered closed loop correction parameter values;
**Figure 7** is a flow chart showing a mobile device side process for providing a data rate based on a value corresponding to filtered network conditions; and
**Figure 8** is a block diagram of a exemplary mobile device capable of being used with the present system

### DETAILED DESCRIPTION

A better correlation between the network conditions and rate requested is required in order to optimize device performance. As will be appreciated by those in the art, the requesting of a lower data rate than a device is capable of achieving based on power and channel conditions results in poor mobile device performance.

The present disclosure is described below with regard to CDMA networks and in particular to supplemental channel request messages in CDMA networks. However, the present disclosure is not limited to CDMA networks, and the methods and apparatus described herein could equally be used for channel resource messages in, for example, Global System for Mobile communications (GSM), Universal Mobile Telecommunications System (UMTS), Long Term Evolution (LTE), or other networks.

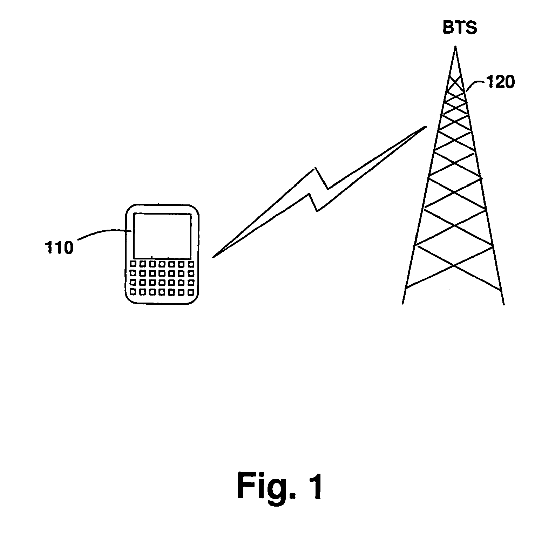

Reference is now made to **Figure 1****.** From a mobile device **110,** a supplemental channel request message (SCRM) is sent to a base station transceiver system (BTS) **120.** At call setup, the base station and mobile negotiate a maximum agreed R-SCH rate. The mobile device **110** will not exceed this rate, even if the CPU and reverse link power budget allow for it. In one aspect of the request, the mobile device performs a calculation for a maximum R-SCH rate it can support (that is within the negotiated maximum rate at call setup). This maximum data rate is then one of the parameters that is then sent to the BTS **120** using the SCRM message.

In European Patent Application Publication Number EP2031763, for example, the maximum requested rate can be the maximum data rate a mobile station is capable of transmitting at the current channel conditions leaving headroom for fast channel variations. A mobile station maybe more conservative or aggressive in its choice of headroom and in its determination of the maximum requested rate depending on what is permitted by the base station.

Various parameters form part of the calculation for the uplink data rate that a mobile device can handle. One of the inputs to the calculation is a parameter called TX_EXTRA_GAIN. TX_EXTRA_GAIN is the power budget left to transmit a given data rate on reverse supplemental channel. This TX_EXTRA_GAIN parameter depends on three items, namely TX_POWER_LIMIT, TX_OPEN_LOOP_POWER and TX_AGC_ADJ. The third parameter, namely TX_AGC_ADJ is a parameter that measures the network conditions, and specifically a closed loop correction value for the network conditions.

Conventionally, an instantaneous value of close-loop correction is sampled to determine a reverse supplemental channel (R-SCH) data rate. The sampling can occur, for example, every 20 ms. The instantaneous value is thus utilized in determining the rate of data transmission.

In test scenarios, closed loop correction can swing widely, especially when in an area of marginal radio frequency (RF) coverage. An instantaneous determination of channel conditions based on closed loop correction for the parameter TX_AGC_ADJ may lead a mobile device to a conclusion that channel conditions are worse than they actually are. The data rate requested is then less than the data rate allowed based on the actual channel conditions.

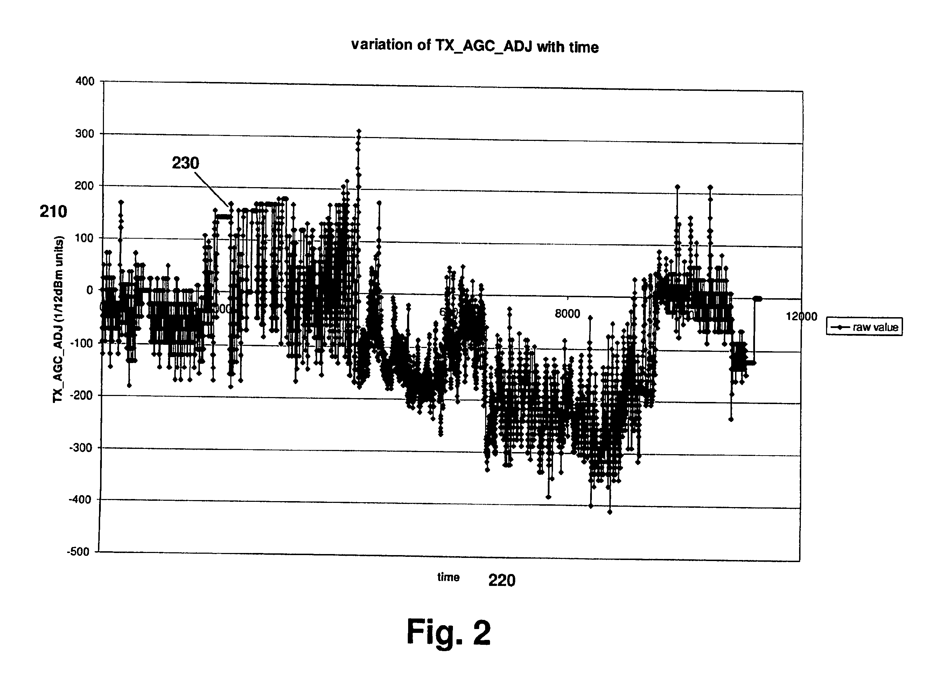

Reference is now made to **Figure 2. Figure 2** illustrates a plot of the network conditions for closed loop correction. In the Figure 2, the closed loop correction parameter TX_AGC_ADJ **210,** as measured in 1/12^{th} dBm units , is shown on the vertical axis, and time **220** is shown on the horizontal axis. The raw value **230** is shown in the plot of **Figure 2** to vary widely under the marginal RF scenario of **Figure 2****.**

Sampling every 20 milliseconds for an instantaneous value of the closed loop correction can result in dramatically varied results. Specifically, values change quickly, and thus a sample may show network conditions to be significantly worse than they actually are.

The present disclosure provides for filtering of channel conditions in order to provide a better determination of channel conditions. In particular, various filters including a moving average or an infinite impulse response (IIR) may be utilized to provide a better reflection of channel conditions. By utilizing the filtered closed loop correction parameter, the data rate for the device is closer to the real data rate allowed, thus leading to better performance of the device.

A first option for a filter is a "moving average filter". As will be appreciated by those in the art, the moving average filter takes samples over a preceding period of time and averages the samples. For example, the moving average filter might average the preceding ten or twenty samples.

The present disclosure provides for the substitution of the instantaneous TX_AGC_ADJ value with the filtered value determined by the moving average filter calculation.

The present disclosure is not limited by any number of samples that need to be used for the moving average. In particular, ten samples taken every twenty milliseconds may be sufficient for removing wild swings out of the closed loop correction values. However, depending on network set-ups the value could be optimized using field testing, for example.

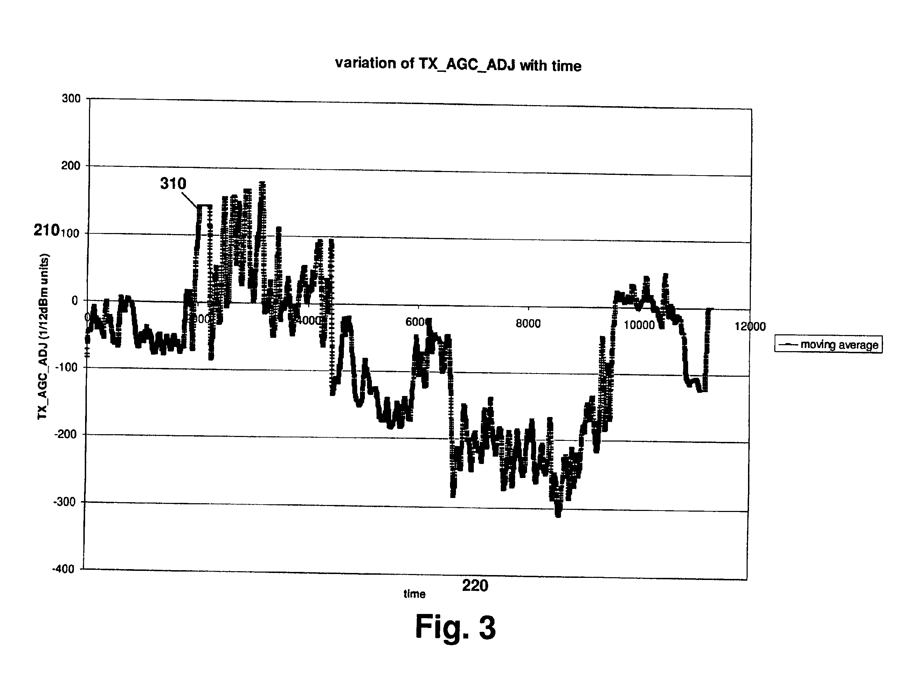

Referring to **Figure 3****,** a filtered response to **Figure 2** is shown as a moving average plot **310,** using a moving average filter. In the example of **Figure 3****,** the moving average filter has a sample size of 50 samples (e.g. past 50 samples). However, this is not meant to be limiting and as indicated above, other applications of the moving average filter could utilize different sample sizes. As seen in **Figure 3****,** the wild fluctuations of **Figure 2** are smoothed out to provide a better result.

The TX_EXTRA_GAIN parameter is then calculated with the filtered TX_AGC_ADJ value, ultimately leading to a data rate being sent in the SCRM message. The data rate sent is more reflective of the channel conditions than an instantaneous power value being used for the data rate.

In an alternative embodiment, instead of using a moving average filter, an infinite impulse response filter (IIR filter) may be used. Using an IIR filter, the following formula may be utilized;
new_filtered_value= ((old_filtered_val*(ten-1))+new_sample)/len

Where new_filtered_value = the output of the filter;
len= the length of the filter;
new_sample = latest sample to filter in; and
old_filtered_val = output of the filter in previous invocation of the filter.

Using the IIR filter instead of the moving average filter, a value that is not significantly dependent on wild fluctuations is used in the data rate calculation.

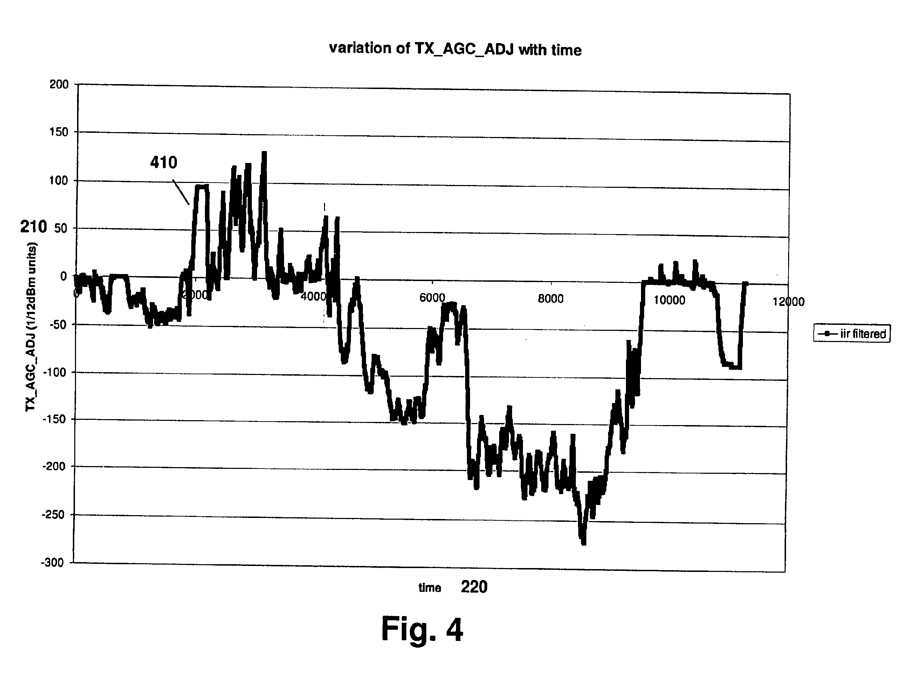

Referring to **Figure 4****,** a filtered response to **Figure 2** using an IIR filter is shown as IIR filter plot **410.** As seen in **Figure 4****,** the wild fluctuations of **Figure 2** are smoothed out to provide for a better result.

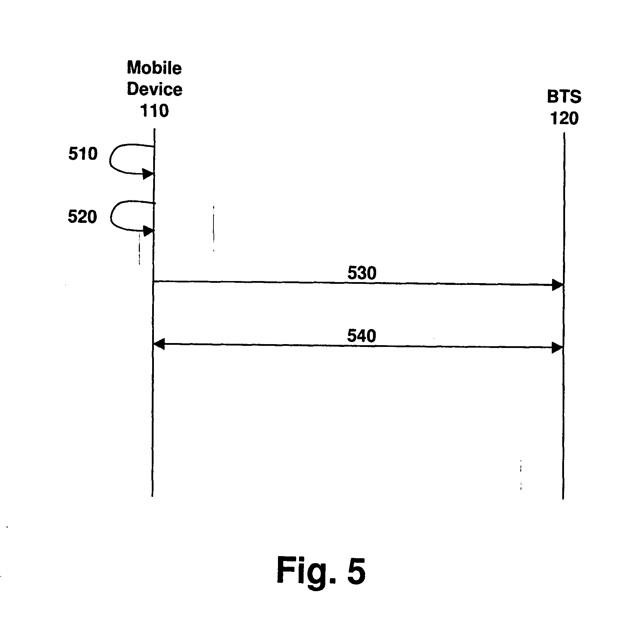

Reference is now made to **Figure 5****.** Depending on the system, every one to five seconds an SCRM message needs to be sent to a network with a data rate suitable for the mobile device. According to conventional implementations, as illustrated in **Figure 5****,** the mobile device **110** calculates an instantaneous closed loop correction parameter value at arrow **510.** At arrow **520** the parameter is utilized to calculate a data rate that mobile **110** can support.

Mobile **110** then sends an SCRM message **530** to BTS **120.**

In response to receiving SCRM message **530,** BTS **120** negotiates a R-SCH channel data rate with mobile device **110,** as seen by arrow **540.**

As will be appreciated by those skilled in the art, when marginal RF conditions exist, the instantaneous value found in block **510** could lead to the data rate calculated in block **520** to be much lower than mobile device **110** can actually support. In this case, mobile device **110** has a data rate fixed for one to five seconds at a rate that is lower than desired, leading to performance issues.

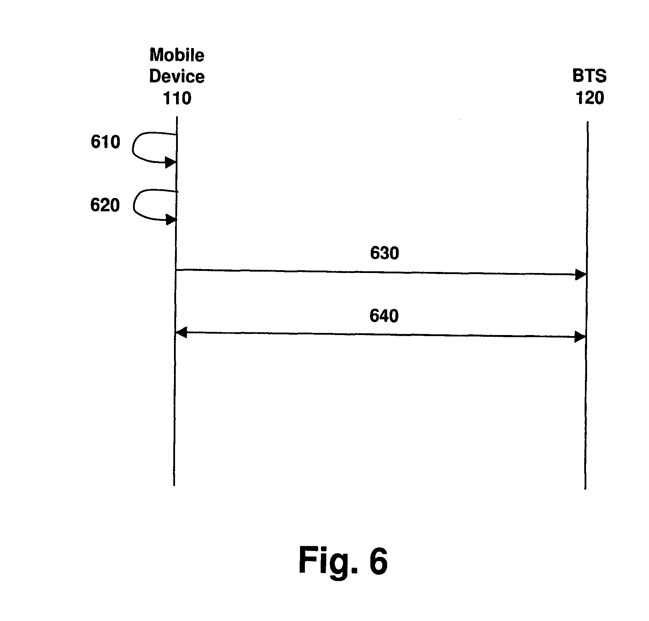

Reference is now made to **Figure 6. Figure 6** illustrates a mobile device **110** communicating with BTS **120.** In **Figure 6****,** a filtered close loop correction is calculated at arrow **610.** The filter used could be the moving average or IIR filters described above, or other similar filter. The filtered value is then utilized to calculate a data rate, as shown at arrow **620.**

Mobile device **110** sends an SCRM message **630** to BTS **120,** where SCRM message **630** contains the requested data rate.

Based on message **630,** BTS **120** negotiates a reverse supplemental channel with mobile device **110,** as shown at arrow **640.**

In the case of **Figure 6****,** a more accurate data rate can be calculated for the mobile device **110.** In particular, the use of the filtered value at arrow **610** provides a more accurate description of network conditions. If network conditions are improving, a higher data rate can be supported by the mobile device **110.** Conversely, if network conditions are degrading, the mobile device **110** could support a lower data rate.

Further, the performance of a device using the filtered value more closely matches the performance of devices that do not properly implement SCRM. Devices not properly implementing SCRM may, for example, provide inaccurate data rates back to the BTS **120,** contrary to the requirements under CDMA.

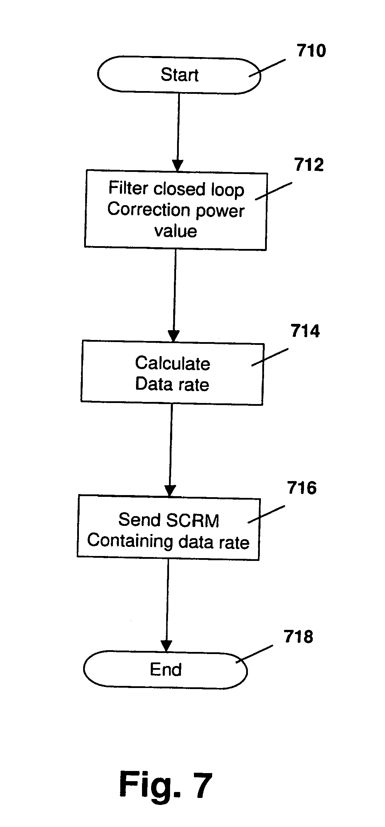

From a mobile device perspective, an exemplary process is shown with regard to **Figure 7****.** In **Figure 7** the process starts at block **710** and proceeds to block **712.** At block **712** a closed loop correction power value is filtered, as described above.

From block **712** the process proceeds to block **714.** At block **714,** a data rate is calculated based on the filtered closed loop correction power value found at block **712.**

From block **714** the process then proceeds to block **716** in which a SCRM is sent to the network, where the SCRM contains the data rate calculated at block **714.** From block **716** the process proceeds to block **718** and ends.

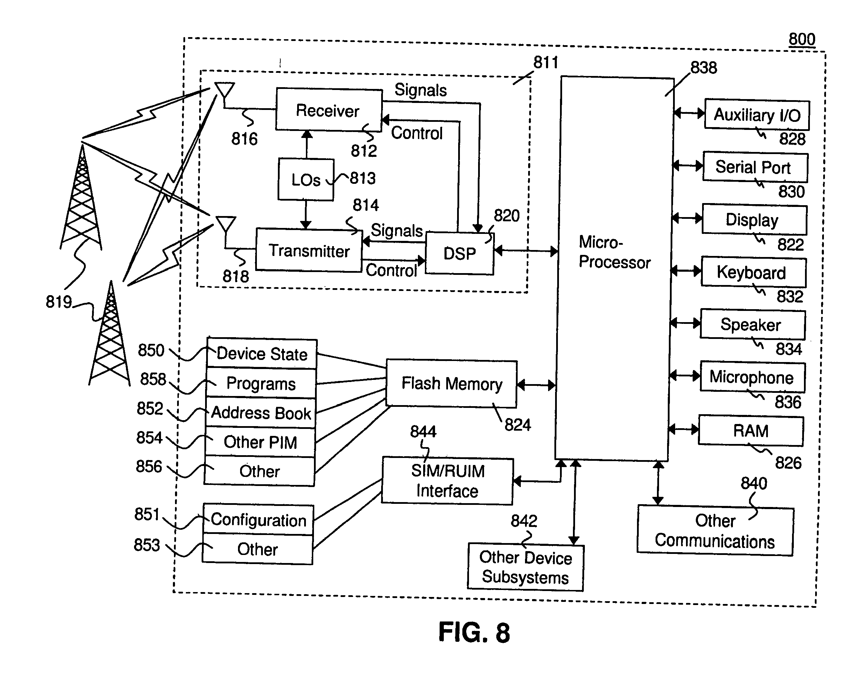

Any mobile device can be used with the method and system described herein. An exemplary mobile device described with reference to **Figure 8** below.

Mobile device **800** is generally a two-way wireless communication device having at least voice and data communication capabilities. Mobile device **800** may have the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile device **800** is enabled for two-way communication, it may incorporate a communication subsystem **811,** including both a receiver **812** and a transmitter **814,** as well as associated components such as one or more, preferably embedded or internal, antenna elements **816** and **818,** local oscillators (LOs) **813,** and a processing module such as a digital signal processor (DSP) **820.** As will be apparent to those skilled in the field of communications, the particular design of the communication subsystem **811** will be dependent upon the communication network in which the device is intended to operate.

Network access requirements may also vary depending upon the type of network **819.** In some CDMA networks network access is associated with a subscriber or user of mobile device **800.** A CDMA mobile device may require a removable user identity module (RUIM) or a subscriber identity module (SIM) card in order to operate on a CDMA network. The SIM/RUIM interface **844** is normally similar to a card-slot into which a SIM/RUIM card can be inserted and ejected like a diskette or PCMCIA card. The SIM/RUIM card can have approximately 64K of memory and hold many key configuration **851,** and other information **853** such as identification, and subscriber related information.

When network registration or activation procedures have been completed, mobile device **800** may send and receive communication signals over the network **819.** As illustrated in **Figure 8****,** network **819** can consist of multiple base stations communicating with the mobile device. For example, in a hybrid CDMA 1x EVDO system, a CDMA base station and an EVDO base station communicate with the mobile station and the mobile device is connected to both simultaneously. The EVDO and CDMA 1x base stations use different paging slots to communicate with the mobile device.

Signals received by antenna **816** through communication network **819** are input to receiver **812,** which may perform such common receiver functions as signal amplification, frequency down conversion, filtering, channel selection and the like, and in the example system shown in **Figure 8****,** analog to digital (A/D) conversion. A/D conversion of a received signal allows more complex communication functions such as demodulation and decoding to be performed in the DSP **820.** In a similar manner, signals to be transmitted are processed, including modulation and encoding for example, by DSP **820** and input to transmitter **814** for digital to analog conversion, frequency up conversion, filtering, amplification and transmission over the communication network **819** via antenna **818.** DSP **820** not only processes communication signals, but also provides for receiver and transmitter control. For example, the gains applied to communication signals in receiver **812** and transmitter **814** may be adaptively controlled through automatic gain control algorithms implemented in DSP **820.**

Mobile device **800** typically includes a microprocessor **838** which controls the overall operation of the device. Communication functions, including at least data and voice communications, are performed through communication subsystem **811.** Microprocessor **838** also interacts with further device subsystems such as the display **822,** flash memory **824,** random access memory (RAM) **826,** auxiliary input/output (I/O) subsystems **828,** serial port **830,** one or more keyboards or keypads **832,** speaker **834,** microphone **836,** other communication subsystem **840** such as a short-range communications subsystem and any other device subsystems generally designated as **842.** Serial port **830** could include a USB port or other port known to those in the art.

Some of the subsystems shown in **Figure 8** perform communication-related functions, whereas other subsystems may provide "resident" or on-device functions. Notably, some subsystems, such as keyboard **832** and display **822,** for example, may be used for both communication-related functions, such as entering a text message for transmission over a communication network, and device-resident functions such as a calculator or task list.

Operating system software used by the microprocessor **838** may bestored in a persistent store such as flash memory **824,** which may instead be a read-only memory (ROM) or similar storage element (not shown). Those skilled in the art will appreciate that the operating system, specific device applications, or parts thereof, may be temporarily loaded into a volatile memory such as RAM **826.** Received communication signals may also be stored in RAM **826.**

As shown, flash memory **824** can be segregated into different areas for both computer programs **858** and program data storage **850, 852, 854** and **856.** These different storage types indicate that each program can allocate a portion of flash memory **824** for their own data storage requirements. Microprocessor **838,** in addition to its operating system functions, preferably enables execution of software applications on the mobile device. A predetermined set of applications that control basic operations, including at least data and voice communication applications for example, will normally be installed on mobile device **800** during manufacturing.
Other applications could be installed subsequently or dynamically.

One software application may be a personal information manager (PIM) application having the ability to organize and manage data items relating to the user of the mobile device such as, but not limited to, e-mail, calendar events, voice mails, appointments, and task items. Naturally, one or more memory stores would be available on the mobile device to facilitate storage of PIM data items. Such PIM application would preferably have the ability to send and receive data items, via the wireless network **819.** In oneembodiment, the PIM data items are seamlessly integrated, synchronized and updated, via the wireless network **819,** with the mobile device user's corresponding data items stored or associated with a host computer system. Further applications may also be loaded onto the mobile device **800** through the network **819,** an auxiliary I/O subsystem **828,** serial port **830,** short-range communications subsystem **840** or any other suitable subsystem **842,** and installed by a user in the RAM **826** or preferably a non-volatile store (not shown) for execution by the microprocessor **838.** Such flexibility in application installation increases the functionality of the device and may provide enhanced on-device functions, communication-related functions, or both. For example, secure communication applications may enable electronic commerce functions and other such financial transactions to be performed using the mobile device **800.**

In a data communication mode, a received signal such as a text message or web page download will be processed by the communication subsystem **811** and input to the microprocessor **838,** which generally further processes the received signal for output to the display **822,** or alternatively to an auxiliary I/O device **828.**

A user of mobile device **800** may also compose data items such as email messages for example, using the keyboard **832,** which is preferably a complete alphanumeric keyboard or telephone-type keypad, in conjunction with the display **822** and possibly an auxiliary I/O device **828.** Such composed items may then be transmitted over a communication network through the communication subsystem **811.**

For voice communications, overall operation of mobile device **800** is similar, except that received signals may be output to a speaker **834** and signals for transmission may be generated by a microphone **836.** Alternative voice or audio I/O subsystems, such as a voice message recording subsystem, may also be implemented on mobile device **800.** Although voice or audio signal output is preferably accomplished primarily through the speaker **834,** display **822** may also by a microphone **836.** Alternative voice or audio I/O subsystems, such as a voice message recording subsystem, may also be implemented on mobile device **800.** Although voice or audio signal output is preferably accomplished primarily through the speaker **834,** display **822** may also be used to provide an indication of the identity of a calling party, the duration of a voice call, or other voice call related information for example.

[0052] Serial port **830** in **Figure 8** would normally be implemented in a personal digital assistant (PDA)-type mobile device for which synchronization with a user's desktop computer (not shown) may be desirable, but is an optional device component. Such a port **830** would enable a user to set preferences through an external device or software application and would extend the capabilities of mobile device **800** by providing for information or software downloads to mobile device **800** other than through a wireless communication network. The alternate download path may for example be used to load an encryption key onto the device through a direct and thus reliable and trusted connection to thereby enable secure device communication. As will be appreciated by those skilled in the art, serial port **830** can further be used to connect the mobile device to a computer to act as a modem.

[0053] Other communications subsystems **840,** such as a short-range communications subsystem, is a further optional component which may provide for communication between mobile device **800** and different systems or devices, which need not necessarily be similar devices. For example, the subsystem **840** may include an infrared device and associated circuits and components or a Bluetooth™ communication module to provide for communication with similarly enabled systems and devices.

## Claims

1. A method for obtaining reverse supplemental channel resources for a mobile device (110; 800) comprising:
filtering a closed loop correction power value (610; 712);
calculating a data rate utilizing the filtered closed loop correction power value (620; 714); and
sending a supplemental channel request message (630; 716), including the calculated data rate, to a base station transceiver system (120).

2. The method of claim 1, wherein the filtering utilizes a moving average filter.

3. The method of claim 2, wherein the moving average filter uses a sample set of between 10 and 50 samples.

4. The method of claim 3, wherein each sample is taken at an interval of 20 milliseconds.

5. The method of claim 1, wherein the filtering uses an infinite impulse response filter.

6. The method of claim 5, wherein the infinite impulse response filter calculates a new filtered value being equal to a filter length minus 1, times an output of the filter in a previous invocation of the filter, plus a new sample, all divided by the filter length.

7. The method of any one of claims 1 to 6, wherein the closed loop correction power value is a TX_AGC_ADJ value for a code division multiple access network, the TX_AGC_ADJ value being a closed loop correction value for network conditions.

8. The method of claim 7, wherein the TX_AGC_ADJ value is used to calculate a TX_EXTRA_GAIN value in the calculation of the data rate, the TX_EXTRA_GAIN value being a power budget left to transmit a given data rate on the reverse supplemental channel.

9. The method of any one of claims 1 to 8, wherein the data rate is calculated for a reverse supplemental channel.

10. The method of any one of claims 1 to 9, wherein the mobile device (110; 800) utilizes a radio technology selected from a Global System for Mobile communications radio technology, a Code Division Multiple Access radio technology, a Universal Mobile Telecommunications System radio technology or a Long Term Evolution radio technology.

11. A mobile device (110; 800) configured to obtain reverse supplemental channel resources, the mobile device comprising:
a processor (838); and
a communications subsystem (811),
wherein the mobile device (110; 800) is configured to perform the method of any one of claims 1 to 10.

12. A computer program product for obtaining reverse supplemental channel resource from a mobile device (110; 800), the computer program product comprising a computer readable medium embodying program code means executable in a processor of a computing device or system for implementing the method of any one of claims 1 to 10.

## Patentansprüche

1. Ein Verfahren zum Erlangen von Rückzusatzkanal-Ressourcen für eine mobile Vorrichtung (110; 800), das aufweist:
Filtern eines "geschlossene Schleife"-Korrekturleistungswerts (610; 712);
Berechnen einer Datenrate unter Verwendung des gefilterten "geschlossene Schleife"-Korrekturleistungswerts (620; 714); und
Senden einer Zusatzkanal-Anforderungsnachricht (630; 716), einschließlich der berechneten Datenrate, an ein Basisstation-Transceiver-System (120).

2. Das Verfahren gemäß Anspruch 1, wobei das Filtern einen "gleitender Mittelwert"-Filter verwendet.

3. Das Verfahren gemäß Anspruch 2, wobei der "gleitender Mittelwert"-Filter einen Abtastsatz von zwischen 10 und 50 Abtastwerten verwendet.

4. Das Verfahren gemäß Anspruch 3, wobei jeder Abtastwert in einem Intervall von 20 Millisekunden genommen wird.

5. Das Verfahren gemäß Anspruch 1, wobei das Filtern einen Filter mit unendlicher Impulsantwort verwendet.

6. Das Verfahren gemäß Anspruch 5, wobei der Filter mit unendlicher Impulsantwort einen neuen gefilterten Wert gleich einer Filterlänge minus 1 mal eine Ausgabe des Filters in einem vorherigen Aufruf des Filters plus ein neuer Abtastwert, alle geteilt durch die Filterlänge berechnet.

7. Das Verfahren gemäß einem der Ansprüche 1 bis 6, wobei der "geschlossene Schleife"-Korrekturleistungswert ein TX_AGC_ADJ-Wert für ein CDMA(Code Division Multiple Access)-Netzwerk ist, wobei der TX_AGC_ADJ-Wert ein "geschlossene Schleife"-Korrekturwert für Netzwerkbedingungen ist.

8. Das Verfahren gemäß Anspruch 7, wobei der TX_AGC_ADJ-Wert verwendet wird, um einen TX_EXTRA_GAIN-Wert bei der Berechnung der Datenrate zu berechnen, wobei der TX_EXTRA_GAIN-Wert ein Leistungsbudget ist, das zum Senden einer gegebenen Datenrate auf dem Rückzusatzkanal übrig ist.

9. Das Verfahren gemäß einem der Ansprüche 1 bis 8, wobei die Datenrate für einen Rückzusatzkanal berechnet wird.

10. Das Verfahren gemäß einem der Ansprüche 1 bis 9, wobei die mobile Vorrichtung (110; 800) eine Funktechnologie verwendet, die aus einer "Global System for Mobile communications"-Funktechnologie, einer "Code Division Multiple Access"-Funktechnologie, einer "Universal Mobile Telecommunications System"-Funktechnologie oder einer "Long Term Evolution"- Funktechnologie ausgewählt ist.

11. Eine mobile Vorrichtung (110; 800), die konfiguriert ist zum Erlangen von Rückzusatzkanal-Ressourcen, wobei die mobile Vorrichtung aufweist:
einen Prozessor (838); und
ein Kommunikationsteilsystem (811),
wobei die mobile Vorrichtung (110; 800) konfiguriert ist, das Verfahren gemäß einem der Ansprüche 1 bis 10 durchzuführen.

12. Computerprogrammprodukt zum Erlangen von Rückzusatzkanal-Ressourcen von einer mobilen Vorrichtung (110; 800), wobei das Computerprogrammprodukt ein computerlesbares Medium aufweist, das Programmcodemittel enthält, die in einem Prozessor einer Computervorrichtung oder eines Systems ausführbar sind zum Implementieren des Verfahrens gemäß einem der Ansprüche 1 bis 10.

## Revendications

1. Procédé d'obtention de ressources de canaux inverses supplémentaires pour un dispositif mobile (100 ; 800), comprenant les étapes consistant à :
filtrer une valeur de puissance de correction de boucle fermée (610 ; 712) ;
calculer un débit de données utilisant la valeur de puissance de correction de boucle fermée ainsi filtrée (620 ; 714) ; et
envoyer à un système émetteur-récepteur de station de base (120) un message de demande de canal supplémentaire (630 ; 716) incluant le débit de données calculé.

2. Procédé selon la revendication 1, dans lequel le filtrage utilise un filtre à moyenne glissante.

3. Procédé selon la revendication 2, dans lequel le filtre à moyenne glissante utilise un ensemble d'échantillons composé de 10 à 50 échantillons.

4. Procédé selon la revendication 3, dans lequel chaque échantillon est prélevé à intervalles de 20 millisecondes.

5. Procédé selon la revendication 1, dans lequel le filtrage utilise un filtre à réponse impulsionnelle infinie.

6. Procédé selon la revendication 5, dans lequel le filtre à réponse impulsionnelle infinie calcule une nouvelle valeur filtrée égale à une longueur de filtre moins 1 fois une sortie du filtre lors d'une invocation précédente du filtre, plus un nouvel échantillon, le tout divisé par la longueur du filtre.

7. Procédé selon l'une quelconque des revendications 1 à 6, dans lequel la valeur de puissance de correction de boucle fermée est une valeur TX_AGC_ADJ pour un réseau à accès multiple par répartition de code, la valeur TX_AGC_ADJ étant une valeur de correction de boucle fermée pour la situation du réseau.

8. Procédé selon la revendication 7, dans lequel la valeur TX_AGC_ADJ est utilisée pour calculer une valeur TX_EXTRA_GAIN dans le calcul du débit de données, la valeur TX_EXTRA_GAIN étant un budget de puissance restant pour émettre un débit de données considéré sur le canal inverse supplémentaire.

9. Procédé selon l'une quelconque des revendications 1 à 8, dans lequel le débit de données est calculé pour un canal inverse supplémentaire.

10. Procédé selon l'une quelconque des revendications 1 à 9, dans lequel le dispositif mobile (110 ; 800) utilise une technologie radio sélectionnée entre les suivantes : technologie radio de Système mondial de communications mobiles, technologie radio d'Accès multiple par répartition de code, technologie radio de Système universel de télécommunication mobile ou technologie radio de l'Evolution à long terme.

11. Dispositif mobile (110 ; 800) configuré pour obtenir des ressources de canaux inverses supplémentaires, le dispositif mobile comprenant :
un processeur (838) ; et
un sous-système de communication (811) ;
dans lequel le dispositif mobile (110 ; 800) est configuré pour exécuter le procédé selon l'une quelconque des revendications 1 à 10.

12. Progiciel d'ordinateur destiné à obtenir des ressources de canaux inverses supplémentaires à partir d'un dispositif mobile (110 ; 800), le progiciel d'ordinateur comprenant un support lisible par ordinateur matérialisant un moyen de code de programme qui peut être exécuté sur un processeur d'un dispositif ou système informatique pour mettre en oeuvre le procédé selon l'une quelconque des revendications 1 à 10.
